# EUROPÄISCHE PATENTSCHRIFT

(11) **EP 2 307 906 B1**
(45) Veröffentlichungstag und Bekanntmachung des Hinweises auf die Patenterteilung: **20.03.2013**
(21) Anmeldenummer: 09777611.6
(22) Anmeldetag: 03.08.2009
(51) Int. Cl.: G01S 7/03, G01S 13/56, G01S 13/88, H01P 7/10, H05B 37/02

(54) **SENSORVORRICHTUNG**
SENSOR DEVICE
DISPOSITIF DE DÉTECTION

(30) Priorität: 01.08.2008 DE 202008010302 U
(43) Veröffentlichungstag der Anmeldung: 13.04.2011
(73) Patentinhaber: Steinel GmbH, 33442 Herzebrock (DE)
(72) Erfinder: STEINEL, Ingo, 33442 Herzebrock-Clarholz (DE)
(74) Vertreter: Behrmann, Niels
(86) Internationale Anmeldenummer: PCT/EP2009/005604
(87) Internationale Veröffentlichungsnummer: WO 2010/012500

(56) Entgegenhaltungen:
- EP-A- 1 947 912
- WO-A-00/77882
- WO-A-03/069725
- US-A- 5 345 240
- US-A- 5 684 458

## Beschreibung

Die vorliegende Erfindung betrifft eine Sensorvorrichtung nach dem Oberbegriff des Hauptanspruchs sowie ein Sensorleuchtensystem nach dem Patentanspruch 9. Eine derartige Vorrichtung ist aus dem Stand der Technik allgemein bekannt und dient beispielsweise als Radar-Sensor zum bewegungsgesteuerten Aktivieren von Innen- oder Außenleuchten. Typische Realisierungen eines solchen Radar-Sensors sind dabei Doppler-Radarsensoren, welche in vorbestimmten (typischerweise gesetzlich zugewiesenen) Frequenzbändern betrieben werden.

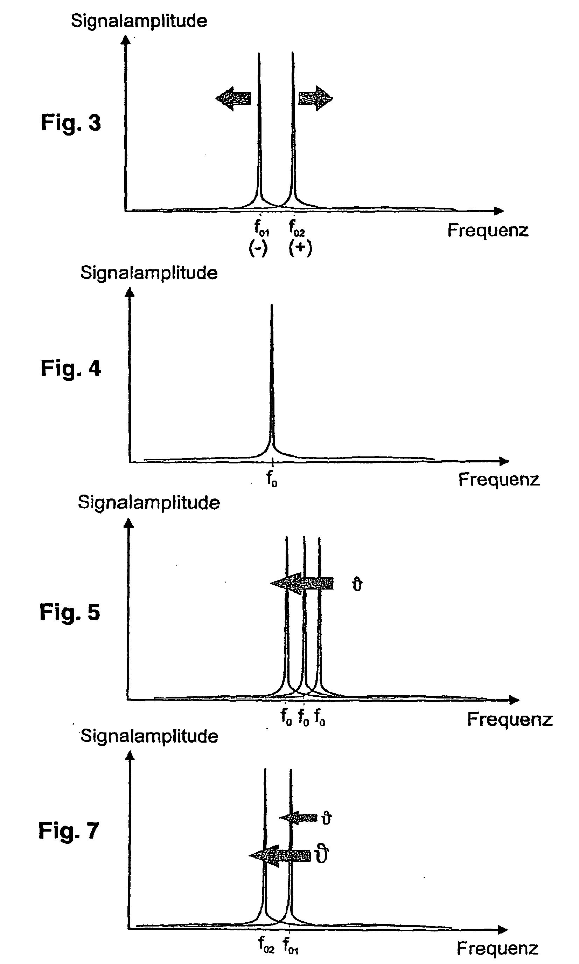

Ein typischer Frequenzbereich ist das sogenannte obere ISM-Band zwischen 5,724 GHz und 5,875 GHz. Innerhalb dieses Bereichs erfolgt durch den Radar-Sensor das Aussenden eines (dauerhaften oder gepulsten) Trägersignals auf einer vorbestimmten Trägerfrequenz f₀ (Fig. 4), wobei die gesetzlichen Vorschriften nicht nur die Sendeenergie bzw. Sendeleistung vorschreiben, auch setzen bereits die engen Frequenz-Bandgrenzen die Bedingung, dass das ausgesendete Signal praktisch keine Oberwellen haben darf, sondern in der in Fig. 4 gezeigten idealisierten Weise möglichst rein sein sollte.

Schaltungstechnisch gibt es verschiedenste Möglichkeiten, die für einen jeweiligen Hochfrequenz-Bewegungssensor notwendige Hochfrequenz-Sende-(und Empfangs-) Elektronik zu realisieren; neben verschiedensten gedruckten oder integrierten Vorgehensweisen zur Realisierung der zugehörigen Hochfrequenz-Schwingkreise kommen dabei insbesondere auch sogenannte dielektrische Schwingkreise, etwa in Form von typischen dielektrischen Resonatoren für Hochfrequenz.

Neben insbesondere in Großserienfertigung unvermeidbarem Einfluss von Bauteiletoleranzen bzw. Bemaßungs- und Fertigungstoleranzen (welche sich im beispielhaft angegebenen Frequenzbereich auch auf die Trägerfrequenz auswirken) hat sich jedoch insbesondere die tatsächlich abgestrahlte Trägerfrequenz einer im Betrieb befindlichen Radar-Sensoreinheit als temperaturbeeinflusst herausgestellt. Dieser Temperatureinfluss wird dabei sowohl von der reinen Umgebungstemperatur (also etwa von Sonneneinstrahlung im Außenleuchtenbetrieb) ausgeübt, kritisch ist jedoch vor allem eine Erwärmung der Hochfrequenz-Baugruppe durch die Wärmeemission von Leuchtmitteln einer zugehörigen Sensorleuchte. Häufig finden diese Produkte in integrierter Form als sogenannte Sensorleuchten Anwendung, so dass die wärmeerzeugende Baugruppe (Leuchtmittel) nur schwer thermisch von der Hochfrequenz-Baugruppe getrennt werden kann und eine vollständige Wärmeentkopplung nicht möglich ist. Dies führt dann dazu, dass (abhängig von der Temperatur, siehe horizontaler Pfeil in Fig. 5) die Trägerfrequenz f₀ driftet.

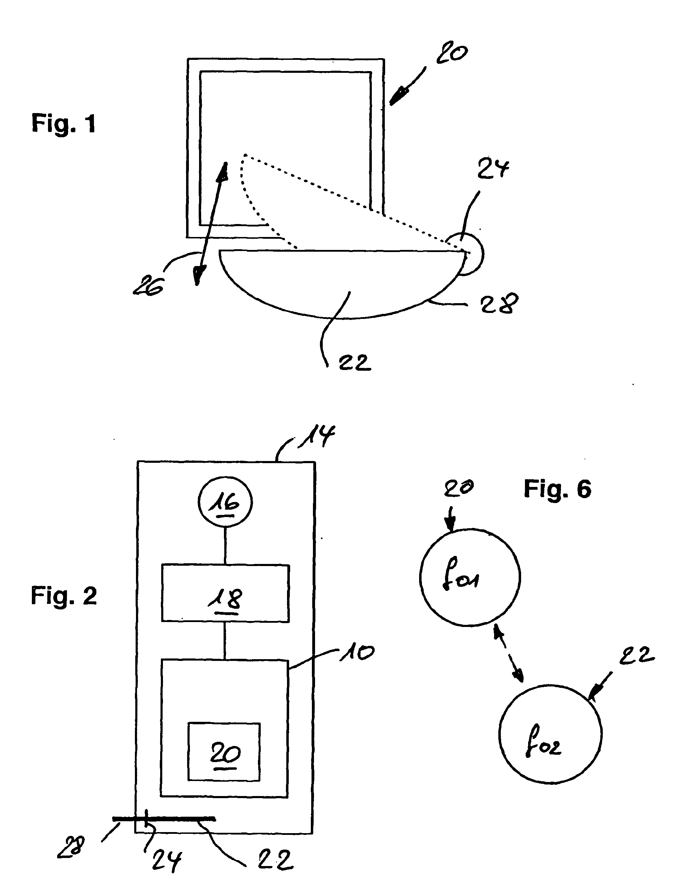

Dieser Vorgang wäre auch angesichts der gestatteten Frequenz-Bandgrenzen tolerabel und beherrschbar, problematisch ist die Situation jedoch insbesondere dann, wenn eine Mehrzahl von Sensorvorrichtungen betrieben werden, die so eng benachbart sind, dass sie sich hochfrequenztechnisch beeinflussen können: Dies verdeutlicht die Schemadarstellung der Fig. 6. Eine erste Sensorleuchte (d.h. Einheit aus Bewegungssensor und Leuchtmittel) 20 ist benachbart zu einer zweiten Sensorleuchte 22 angebracht. Beide Leuchten, aus Serienproduktion, haben Trägerfrequenzen f₀₁ bzw. f₀₂, welche (z. B. innerhalb des oberen ISM-Bandes) praktisch identisch bzw. lediglich durch Bauteile-, Fertigungs- und/oder Maßtoleranzen bedingt verschieden sind.

Im Betrieb würde nunmehr die Gefahr bestehen, dass das Radar-Sensorsignal des Sensors der Einheit 20 den Radar-Sensor der Einheit 22 aktiviert (genauer: als von einem Nutzobjekt reflektiertes Erfassungssignal interpretiert wird), mit dem Ergebnis, dass es zu unerwünschten Fehlschaltungen bzw. Fehlfunktionen der Gesamteinheit kommt.

Diese Problematik wird dann noch verschärft, wenn sich durch Erwärmung der jeweiligen Einheiten im Beleuchtungsbetrieb, wie oben beschrieben, die jeweiligen Trägerfrequenzen verschieben, so dass eine mögliche gegenseitige Beeinflussung, welche im Ruhe- (d.h. Nicht-Beleuchtungs-)Zustand gar nicht erkennbar war, sich plötzlich als Problem zeigt, wie die Fig. 7 schematisch verdeutlicht; hier symbolisiert der Doppelpfeil, wie sich ursprünglich voneinander (leicht) beabstandete Trägerfrequenzen f₀₁ und f₀₂ bedingt durch verschiedene thermische Eigenschaften unerwünscht einander annähern.

Eine unerwünschte gegenseitige Beeinflussung von Sensoren lässt sich zwar durch elektronische Maßnahmen, wie etwa die Modulation der jeweiligen Radar Sendesignale, lösen, ist jedoch ebenso aufwändig (und damit potentiell kostensteigernd für das kostensensitive Massenprodukt "Radar-Senso") wie etwa eine manuell konfigurierbare und etwa per Schalter auswählbare Frequenzeinstellung aus einer vorgegebenen Auswahl von vorbestimmten Einzelfrequenzen. Eine entsprechende bewegungssensorgesteuerte leuchtenvorrichtung ist beispielsweise aus der EP 1 947 912 bekannt.

Aufgabe der vorliegenden Erfindung ist es daher, eine Sensorvorrichtung nach dem "Oberbegriff des Hauptanspruchs zu schaffen, welche einen einfachen und flexiblen, dabei preisgünstig herzustellenden Weg aufzeigt, wie insbesondere in einem Montagezustand mehrerer einander im Erfassungs- bzw. Beeinflussungsbereich benachbarter Sensoren eine gegenseitige hochfrequenzmäßige Beeinflussung vermieden werden kann.

Die Aufgabe wird durch die Sensorvorrichtung mit den Merkmalen des Hauptanspruchs sowie das Sensorleuchtensystem nach dem Patentanspruch 9 gelöst; vorteilhafte Weiterbildungen der Erfindung sind in den Unteransprüchen beschrieben.

In erfindungsgemäß vorteilhafter Weise bewirkt die manuell betätigbare und weiter bevorzugt als dielektrisch wirksames Element ausgebildete Verstelleinheit ein einfaches und gehäuseextern zugreifbares Verstimmen eines zugehörigen Hochfrequenz-Schwingkreises, dass durch einfache manuelle Justiermaßnahmen einer Bedien- und/oder Einrichtperson am Ort eine ungewünschte gegenseitige Beeinflussung dauerhaft vermieden werden kann.

So ist zunächst vorteilhaft vorgesehen, dass die Sensorvorrichtung, weiter bevorzugt zusammen mit von dieser anzusteuernden Leuchtmitteln, in einem Leuchten- und/oder Sensorgehäuse aufgenommen ist, an welchem von gehäuseextern die mechanischen Mittel zum einstellbaren Verändern und/oder Verstimmen betätigbar sind. Weiter vorteilhaft gemäß bevorzugter Weiterbildungen geschieht dies etwa dadurch, dass ein geeignet auf den Hochfrequenz-Schwingkreis wirkendes Element (im Fall eines dielektrisch wirksamen Schwingkreises ein entsprechend dielektrisches Element) durch eine mechanische Betätigung, wie etwa Ein- bzw. Ausschwenken, Schieben, Schwenken oder Klappen erfolgen kann. Dies ist nicht nur mechanisch einfach und mit geringem Herstellungsaufwand (darüber hinaus gut großserientauglich) zu realisieren, darüber hinaus ist eine derartige mechanische Lösung gerade im umgebungsbeeinflussten Außeneinsatz zuverlässig und dauerhaft und häufig elektronischen bzw. elektromechanischen Lösungen (wie etwa Schaltern) überlegen, die z. B. Korrosionsprobleme bringen.

Auch sind die beschriebenen mechanischen Bewegungs- bzw. Stellformen für das mit dem Hochfrequenz-Schwingkreis zusammenwirkende Element (z. B. im dielektrischen Element) geeignet stufenlos, so dass je nach Einsatzzweck auch eine Anzahl von vier, fünf oder sechs verschiedenen Sensorleuchten in einem unmittelbaren gegenseitigen HF-Einflussbereich positioniert werden kann, ohne dass eine Beeinflussung erfolgen muss - die vorliegende Technologie bewirkt eine äußerst einfache, gleichwohl wirksame Verstimmung der jeweiligen Lokaloszillatoren, so dass die gegenseitigen Beeinflussungen wirksam vermieden werden können.

Gemäß besonders bevorzugter Realisierungsformen ist das mechanische Element als einstückiger Körper ausgebildet, welcher bevorzugt flach und/oder exzentrisch um eine Achse schwenk- oder drehbar gelagert ist; dies bringt für die Großserienfertigung Vorteile.

In der praktischen Realisierung wird sich die vorliegende Erfindung insbesondere im Zusammenhang mit sogenannten Sensorleuchten als nützlich erweisen, nämlich solchen Vorrichtungen, bei welchen sich in einem gemeinsamen Gehäuse die Sensorvorrichtung, eingeschlossen der Bewegungssensor mit Hochfrequenz-Schwingkreis als bestimmender Baugruppe, mit wärmeerzeugenden Leuchtmitteln befindet, da hier, wie eingangs dargelegt, die frequenzbeeinflussende Problematik am größten ist. Die vorliegende Erfindung eignet sich jedoch für beliebige Sensoranwendungen (auch außerhalb des Beleuchtungsbereichs), bei welchen wirksam gegenseitige HF-mäßige Beeinflussungen einer Mehrzahl von Radar-Sensoren vermieden werden sollen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Schemaansicht des Zusammenwirkens eines einen Hochfrequenz-Schwingkreis aufweisenden Radarmoduls mit einem mechanisch schwenkbaren Körper als Frequenzversteller zum Verdeutlichen des Grundprinzips der vorliegenden Erfindung;
- Fig. 2:: ein schematisches Blockschaltbild zum Verdeutlichen des Anwendungskontexts der Anordnung der Fig. 1 in einer exemplarischen Radar-Sensorleuchte;
- Fig. 3:: ein Spektraldiagramm zum Verdeutlichen der Möglichkeit, zwei Trägerfrequenzen durch die vorliegende Erfindung im Frequenzspektrum voneinander zu entfernen;
- Fig. 4, 5:: Spektraldiagramme zum Verdeutlichen einer einzelnen Trägerfrequenz sowie deren temperaturbedingten Frequenzdrift;
- Fig. 6:: eine Schemaansicht zum Verdeutlichen einer möglichen gegenseitigen Beeinflussung zweier Radar-Sensoren im gegenseitigen HF-Erfassungsbereich und
- Fig. 7:: ein Spektraldiagramm zum Verdeutlichen unterschiedlichen Temperaturdriftverhaltens zweier Radar-Sensoren.

Fig. 1 verdeutlicht als vereinfachte Prinzipdarstellung die Funktionsweise der vorliegenden Erfindung: Eine zur Vereinfachung modulhaft dargestellte Hochfrequenz-Baugruppe 20 eines Radar-Sensors ist feststehend montiert und weist einen geeigneten Hochfrequenz-Schwingkreis für zugehörige Oszillator-Schaltkreise auf. Die Einheit 20 strahlt ein Hochfrequenz-Trägersignal (z. B. ein Dauersignal) auf einer durch die hochfrequenztechnische Abstimmung bestimmten Trägerfrequenz aus, welche im dargestellten Beispiel auf das ISM-Band abgestimmt ist. Beeinflusst wird die exakte Sendefrequenz dabei einerseits von Bauteile-, Fertigungs- und Maßtoleranzen, andererseits von einer aktuellen Temperatur des Moduls. Im dargestellten Beispiel ist zudem ein sogenannter dielektrischer Resonator (nicht gezeigt) wesentliches frequenzbestimmendes Bauelement.

Mit diesem dielektrischen Resonator wirkt nunmehr zusammen ein mechanischer Verstellkörper 22, welcher in der in Fig. 1 gezeigten Weise um eine feste Dreh- bzw. Schwenkachse 24 gelagert ist und durch manuelle Betätigung an einem seitlichen Eingriffsbereich 28 so in oder außer Eingriff mit einem dielektrischen Resonator des Moduls 20 gebracht werden kann, dass eine gesteuerte dielektrische Beeinflussung stattfindet. Mit anderen Worten, durch die beschriebenen mechanischen Mittel, nämlich das gesteuerte Verschwenken des asymmetrisch-sichelförmig gebogenen und exzentrisch gelagerten Körpers 22 wird gezielt eine Schwingkreiseigenschaft des Radarmoduls 20 verändert, so dass es zu einer Frequenzverstimmung, also einer Verschiebung der abgestrahlten Trägerfrequenz kommt. Der in Fig. 1 gezeigte Doppelpfeil 26 verdeutlicht dabei exemplarisch den Schwenkweg; die gestrichelte Kontur eine alternative Schwenkposition. Dabei sind Konstellationen denkbar, dass der verschwenkte Körper 22 in Kontakt mit seinem stationären Partner steht; Alternativen sind denkbar, bei welchen berührungslos die Einheit 22 relativ zum Modul bzw. einer schwingungsbestimmenden Einheit in dieser geführt ist.

Die mechanische Ausgestaltung obliegt dem jeweiligen Einsatzzweck sowie den Rahmenbedingungen, z. B. des Gehäuses; für den Einzelfall würde in geeigneter Weise der Körper 22 zur Einhand- bzw. Einfinger-Bedienung ausgestaltet und z. B. durch geeignete Schwergängigkeit der Lagerung 24 ein unbeabsichtigtes Verstellen verhindert.

Die Fig. 2 verdeutlicht einen möglichen Einbaukontext der Anordnung nach Fig. 1: In einem Gehäuse 14 einer typischen Sensorleuchte sind wärmeerzeugende Leuchtmittel 16, z. B. Leistungs-LED oder Glühlampen, angeordnet, welche durch eine Leistungselektronik 18 angesteuert werden (diese sind durch nicht näher gezeigte Mittel mit einer stationären Netzversorgung verbunden). Die Leistungselektronik 18 wird wiederum angesteuert durch eine Bewegungssensoreinheit 10, deren wesentliches Element die Hochfrequenz-Baugruppe 20 der Fig. 1 ist. Diese Anordnung, stationär im Gehäuse 14 montiert (welches wiederum geeignet im Innen- oder Außenbereich an Wand oder Decke befestigt sein kann), wirkt zusammen mit dem schwenkbar im Gehäuse um die Achse 24 befestigten Körper 22; durch eine geeignete Gehäuseöffnung von außen zugreifbar bleibt der Abschnitt 28.

Im praktischen Betrieb ermöglicht die vorliegende Erfindung insbesondere auch eine beeinflussungsfreie Montage mehrerer Sensorleuchten analog der Fig. 6. Die Bedienperson muss lediglich im Fall des Auftretens von (offensichtlich erkennbaren) gegenseitigen Beeinflussungen durch Fehlschaltungen an einer oder beiden Einheiten ein Verstimmen der Trägerfrequenz vornehmen. Die Fig. 3 zeigt das Beispiel, dass beide Trägerfrequenzen f₀₁ und f₀₂ eines Paares von Sensorleuchten 20, 22 (Fig. 6) durch Verstimmen in einander entgegengesetzte Richtungen voneinander getrennt werden.

Die vorliegende Erfindung ist nicht auf das Grundprinzip der dielektrischen Frequenzbeeinflussung begrenzt. Vielmehr erstreckt sich die vorliegende Erfindung auf jegliche mögliche Verstimmung elektromagnetischer Resonatoren, welche durch einen mechanisch bewegten Körper bewirkt werden kann, möglich ist also etwa auch das Einschwenken eines weichmagnetischen Körpers in ein Hochfrequenz-Oszillatorsystem oder dergleichen.

Auch ist die vorliegende Erfindung nicht auf Anwendungen im Beleuchtungsbereich und/oder Einsatz in Sensorleuchten beschränkt. Vielmehr erstreckt sich die vorliegende Erfindung auf jegliche Anwendung, welche in erfindungsgemäß vorteilhafter Weise durch einfache mechanisch bewirkte Frequenzverstimmung eine unerwünschte gegenseitige Beeinflussung von Hochfrequenz-Bewegungssensoren verhindern kann.

## Patentansprüche

1. Sensorvorrichtung zum bewegungsgesteuerten Aktivieren einer Leuchte, mit einem auf Hochfrequenzbasis wirkenden Bewegungssensor (10), insbesondere Radar-Bewegungssensor, der zum Erzeugen eines Hochfrequenz-Sendesignals einen Hochfrequenz-Schwingkreis aufweist,
**gekennzeichnet durch**
manuell betätigbare und mit dem Hochfrequenz-Schwingkreis zusammenwirkende mechanische Mittel (12) zum einstellbaren Verändern und/oder Verstimmen einer Resonanzfrequenz des Hochfrequenz-Schwingkreises, wobei die Sensorvorrichtung in einem Leuchtengehäuse (14) aufgenommen ist, an welchem von gehäuseextern die mechanischen Mittel zum einstellbaren Verändern und/oder Verstimmen der Resonanzfrequenz **durch** eine mechanische Betätigung in Form eines Ein- bzw. Ausschwenkens, Schiebens, Schwenkens oder Klappens eines auf den Hochfrequenz-Schweinkreis wirkenden Elements betätigbar sind.

2. Vorrichtung nach Anspruch 1,
**dadurch gekennzeichnet,**
**dass** die mechanischen Mittel als dielektrisch mit dem Hochfrequenz-Schwingkreis zusammenwirkendes, mechanisch bewegbar gelagertes oder geführtes Element realisiert sind.

3. Vorrichtung nach Anspruch 2,
**dadurch gekennzeichnet,**
**dass** das dielektrische Element zum einstellbaren Schwenken, Klappen und/oder Schieben gegenüber einem Schwingkreis-Bauelement des Hochfrequenz-Schwingkreises eingerichtet ist.

4. Vorrichtung nach Anspruch 3,
**dadurch gekennzeichnet,**
**dass** das Schwingkreis-Bauelement ein stationäres Resonatorelement des Hochfrequenz-Schwingkreises ist.

5. Vorrichtung nach einem der Ansprüche 1 bis 4,
**dadurch gekennzeichnet,**
**dass** das dielektrische Element einstückig ausgebildet und exzentrisch um eine Dreh- oder Schwenkachse (24) gelagert ist.

6. Vorrichtung nach Anspruch 5,
**dadurch gekennzeichnet,**
**dass** das dielektrische Element scheiben-, sichel- und/oder bogenförmig ausgestaltet ist und randseitig einen manuellen Angriffsbereich (28) ausbildet.

7. Vorrichtung nach einem der Ansprüche 1 bis 6,
**dadurch gekennzeichnet,**
**dass** das Leuchstengehäuse (14) ein bewegungsgesteuert aktivierbares Leuchtmittel (16), eine dem Leuchtmittel zugeordnete Ansteuerelektronik (18) sowie eine den Hochfrequenz-Schaltkreis aufweisende Sensorelektronik des Bewegungssensors (10) aufweist.

8. Vorrichtung nach Anspruch 7,
**dadurch gekennzeichnet,**
**dass** das Leuchtmittel eine Leistungs-LED, Halogen-Leuchtmittel, Entladungs-Leuchtmittel oder eine Glühlampe aufweist.

9. Sensorleuchtensystem mit einer Mehrzahl von bewegungssensorgesteuerten Leuchten, die eine Sensorvorrichtung nach einem der Ansprüche 1 bis 8 aufweisen,
wobei eine Mehrzahl der Leuchten so montiert und/oder eingerichtet ist, dass ein Hochfrequenz-Erfassungsbereich einer ersten der Leuchten eine zweite der Leuchten einschließt, insbesondere deren Hochfrequenz-Sendesignal erfassen kann.

## Claims

1. Sensor device for the movement-controlled activation of a lamp, comprising a movement sensor (10) which operates on a high-frequency basis, in particular a radar movement sensor, which comprises a high-frequency oscillating circuit for generating a high-frequency transmitting signal, **characterised by** mechanical means (12), which can be actuated manually and cooperate with the high-frequency oscillating circuit, for adjustably changing and/or detuning a resonant frequency of the high-frequency oscillating circuit, the sensor device being received in a luminaire housing (14), on which the mechanical means for adjustably changing and/or detuning the resonant frequency by a mechanical actuation in the form of pivoting inwards, pivoting outwards, sliding, pivoting or folding of an element which acts on the high-frequency oscillating circuit can be actuated from outside the housing.

2. Device according to claim 1, **characterised in that** the mechanical means are produced as an element which dielectrically cooperates with the high-frequency oscillating circuit and is mounted or guided so as to be mechanically movable.

3. Device according to claim 2, **characterised in that** the dielectric element is configured to adjustably pivot, fold and/or slide relative to an oscillating circuit component of the high-frequency oscillating circuit.

4. Device according to claim 3, **characterised in that** the oscillating circuit component is a stationary resonator element of the high-frequency oscillating circuit.

5. Device according to any of claims 1 to 4, **characterised in that** the dielectric element is formed in one piece and is mounted eccentrically about a rotational or pivot axis (24).

6. Device according to claim 5, **characterised in that** the dielectric element is designed to be disc-shaped, sickle-shaped and/or curved and forms a manual engagement region (28) at the edge thereof.

7. Device according to any of claims 1 to 6, **characterised in that** the luminaire housing (14) comprises a lamp (16) which can be activated in a movement-controlled manner, a drive electronics unit (18) which is assigned to the lamp and a sensor electronics unit, comprising the high-frequency circuit, of the movement sensor (10).

8. Device according to claim 7, **characterised in that** the lamp comprises a power-LED, a halogen lamp, a discharge lamp or an incandescent lamp.

9. Sensor lamp system comprising a plurality of movement-sensor-controlled lamps, which comprise a sensor device according to any of claims 1 to 8, wherein a plurality of lamps are assembled and/or configured in such a way that a high-frequency detection region of a first of the lamps includes a second of the lamps, more particularly can detect the high-frequency transmitting signal thereof.

## Revendications

1. Dispositif à capteur destiné à l'activation d'une lampe commandée par le mouvement, comprenant un capteur de mouvement (10) fonctionnant à haute fréquence, notamment un capteur de mouvement de type radar, comprenant un circuit oscillant à haute fréquence destiné à générer un signal d'émission à haute fréquence, **caractérisé par** des moyens mécaniques (12) actionnables manuellement et coopérant avec le circuit oscillant à haute fréquence pour modifier de manière réglable et/ou désaccorder une fréquence de résonance du circuit oscillant à haute fréquence, dans lequel le dispositif à capteur est reçu dans un boîtier de lampe (14) sur lequel les moyens mécaniques destinés à modifier de manière réglable et/ou désaccorder la fréquence de résonance peuvent être actionnés de l'extérieur du boîtier par l'intermédiaire d'un actionnement mécanique sous la forme d'un pivotement vers l'intérieur ou vers l'extérieur, d'un coulissement, d'un pivotement ou d'un repliement d'un élément agissant sur le circuit oscillant à haute fréquence.

2. Dispositif selon la revendication 1, **caractérisé en ce que** les moyens mécaniques sont réalisés sous la forme d'un élément diélectrique coopérant avec le circuit oscillant à haute fréquence, supportés ou guidés de manière mobile mécaniquement.

3. Dispositif selon la revendication 2, **caractérisé en ce que** l'élément diélectrique est conçu pour effectuer un pivotement, un repliement et/ou un coulissement réglables par rapport à un composant de circuit oscillant du circuit oscillant à haute fréquence.

4. Dispositif selon la revendication 3, **caractérisé en ce que** le composant de circuit à haute fréquence est un élément de résonateur stationnaire du circuit oscillant à haute fréquence.

5. Dispositif selon l'une quelconque des revendications 1 à 4, **caractérisé en ce que** l'élément diélectrique est réalisé de manière monolithique et est disposé de manière excentrique par rapport à un axe de rotation ou de pivotement (24).

6. Dispositif selon la revendication 5, **caractérisé en ce que** l'élément diélectrique est conçu sous la forme d'un disque, d'une faucille et/ou d'un arc et forme sur ses bords une zone d'engagement manuel (28).

7. Dispositif selon l'une quelconque des revendications 1 à 6, **caractérisé en ce que** le boîtier de lampe (14) présente un moyen d'éclairage (16) pouvant être activé en étant commandé par le mouvement, une électronique de commande (18) associée au moyen d'éclairage ainsi qu'une électronique de capteur comportant un circuit à haute fréquence du capteur de mouvement (10).

8. Dispositif selon la revendication 7, **caractérisé en ce que** le moyen d'éclairage comporte une LED de charge, un moyen d'éclairage à halogène, un moyen d'éclairage à décharge, ou une lampe à incandescence.

9. Système de lampe à capteur comportant une pluralité de lampes commandées par capteur de mouvement qui comprennent un dispositif à capteur selon l'une quelconque des revendications 1 à 8, dans lequel une pluralité des lampes sont montées et/ou agencées de manière à ce qu'une zone de détection à haute fréquence d'une première des lampes englobe une seconde des lampes, notamment de manière à pouvoir détecter son signal d'émission à haute fréquence.
